# FASCICULE DE BREVET EUROPEEN

(11) **EP 4 334 749 B1**
(45) Date de publication et mention de la délivrance du brevet: **27.11.2024**
(21) Numéro de dépôt: 22735526.0
(22) Date de dépôt: 26.04.2022
(51) Int. Cl.: G01S 17/58, G01S 17/95, G01S 7/481

(54) **SYSTEME LIDAR A IMPULSIONS**
GEPULSTES LIDAR-SYSTEM
PULSED LIDAR SYSTEM

(30) Priorité: 06.05.2021 FR 2104768
(43) Date de publication de la demande: 13.03.2024
(73) Titulaire: Office National d'Etudes et de Recherches Aérospatiales, 91120 Palaiseau (FR)
(72) Inventeur: LOMBARD, Laurent, 91120 PALAISEAU (FR); DOLFI-BOUTEYRE, Agnès, 91120 PALAISEAU (FR)
(74) Mandataire: IPAZ
(86) Numéro de dépôt international: PCT/FR2022/050781
(87) Numéro de publication internationale: WO 2022/234211

(56) Documents cités:
- CN-A- 112 698 355
- US-A1- 2014 233 013

## Description

### Domaine technique

La présente description concerne un système LIDAR à impulsions, en particulier un tel système LIDAR qui est adapté pour effectuer des mesures de vitesse anémométrique. Bien que LIDAR soit l'acronyme de «Light Détection And Ranging» en anglais, pour détection et mesure de distance avec de la lumière, les systèmes LIDAR sont très appropriés pour effectuer des mesures de vitesse à distance.

### Technique antérieure

Connaître la vitesse du vent à distance est utile dans de nombreux domaines, notamment la sécurité aérienne, par exemple pour détecter la présence de turbulences à proximité des pistes d'un aéroport, ou pour détecter des rafales de vent à bord d'un avion en vol afin de compenser des effets d'usure prématurée qui sont provoqués par les rafales sur les structures de l'avion. D'autres domaines où une telle connaissance est aussi utile sont le sondage et la gestion de sites éoliens, ou la mesure des courants atmosphériques depuis l'espace pour des prévisions météorologiques.

De façon connue, un système LIDAR à impulsions permet de mesurer la composante de vitesse d'une cible qui est parallèle à la direction d'émission du système LIDAR, ainsi que la distance d'éloignement de la cible par rapport au système LIDAR. Notamment, un système LIDAR à impulsions qui est conçu pour des mesures anémométriques permet d'obtenir des estimations de la composante de vitesse du vent qui est parallèle à la direction d'émission du système LIDAR, en fonction de la distance d'éloignement mesurée selon cette direction d'émission. Or pour de telles mesures anémométriques, les signaux qui sont détectés par le système LIDAR et à partir desquels sont obtenus les résultats de mesure pour la vitesse du vent, sont produits par une rétrodiffusion des impulsions émises qui est provoquée par des particules présentes en suspension dans l'air. Ces signaux de détection ont des intensités très faibles, de sorte qu'il est important d'améliorer le rapport signal-sur-bruit qui leur est associé.

De façon aussi connue, lorsque le système LIDAR à impulsions utilise une détection hétérodyne, c'est-à-dire lorsque le système est cohérent entre émission et détection, son rapport signal-sur-bruit est proportionnel à E·PRF^{1/2}, où E est l'énergie de chaque impulsion rétrodiffusée puis détectée, et PRF est la fréquence de répétition des impulsions, ou «Pulse Répétition Frequency» en anglais. Des efforts sont donc effectués pour augmenter les valeurs de l'énergie E et de la fréquence PRF.

Augmenter l'énergie E pourrait être réalisé en augmentant l'énergie de chaque impulsion telle qu'elle est émise par le système LIDAR. En effet, le rayonnement est produit initialement par une source laser, qui n'induit pas par elle-même une limitation pour la puissance du rayonnement qui est émis vers l'extérieur. Or la réalisation du système LIDAR en utilisant une technologie de connexions par fibres optiques présente des avantages considérables, notamment une robustesse du système qui est accrue et la suppression de mécanismes d'alignement des composants optiques du système les uns par rapport aux autres. Mais le phénomène connu de diffusion Brillouin stimulée, ou SBS pour «Stimulated Brillouin Scattering», qui se produit dans les fibres optiques limite la valeur de puissance-crête que peut avoir chaque impulsion émise.

Par ailleurs, la fréquence PRF est limitée par la portée du système LIDAR. En effet, il est nécessaire qu'une impulsion de rayonnement qui a été émise en direction de la cible soit détectée en retour avant d'émettre l'impulsion suivante, afin de corréler chaque partie de rayonnement détectée avec l'instant correct d'émission d'impulsion, pour en déduire la valeur de distance d'éloignement de la cible. Autrement dit, la fréquence PRF est limitée par la portée L qui est prescrite pour le système LIDAR selon la formule : PRF < C/(2·L), où C est la vitesse de la lumière.

Ainsi, ces limitations sur l'énergie des impulsions émises et la fréquence de répétition des impulsions, à cause des conséquences qui en résultent pour le rapport signal-sur-bruit des signaux de détection hétérodyne, empêchent d'améliorer la précision des résultats de mesure, notamment des résultats de mesures de vitesse anémométrique.

Des systèmes LIDAR cohérents sont connus de US 2014/233013 A1 et CN 112 698 355 A.

### Problème technique

A partir de cette situation, un but de la présente invention est de proposer un nouveau système LIDAR à impulsions, pour lequel le rapport signal-sur-bruit des signaux de détection est amélioré.

Un but complémentaire de l'invention est qu'un tel système LIDAR soit compatible avec l'utilisation de fibres optiques pour connecter entre eux les composants optiques à l'intérieur du système LIDAR.

Un autre but complémentaire de l'invention est qu'un tel système LIDAR soit adapté pour des mesures de vitesse anémométrique.

### Résumé de l'invention

Pour atteindre l'un au moins de ces buts ou un autre, un aspect de l'invention propose un système LIDAR à impulsions, qui est adapté pour déterminer une valeur d'un décalage fréquentiel d'effet Doppler subi par une série d'impulsions de rayonnement émises successivement par le système en direction d'une cible, entre des parties des impulsions telles que reçues après rétro-réflexion ou rétrodiffusion sur la cible et les mêmes impulsions telles qu'émises par le système. Le système fournit ensuite, à partir de la valeur déterminée pour le décalage fréquentiel, une estimation d'une composante de vitesse de la cible qui est parallèle à une direction d'émission optique du système. Pour cela, le système comprend :
- une voie d'émission, conçue pour produire la série d'impulsions,
- une voie de détection, conçue pour détecter les parties des impulsions reçues après rétro-réflexion ou rétrodiffusion sur la cible, et pour produire des signaux de détection hétérodyne qui correspondent aux impulsions de la série, et
- un module d'analyse spectrale, adapté pour effectuer une analyse spectrale des signaux de détection hétérodyne, de sorte que la valeur du décalage fréquentiel résulte de contributions de détection hétérodyne qui correspondent aux impulsions de la série. L'utilisation de plusieurs impulsions pour effectuer l'analyse spectrale procure une première amélioration du rapport signal-sur-bruit, et la précision des résultats de mesure qui sont fournis par le système LIDAR est améliorée en conséquence.

Selon l'invention, le système LIDAR possède les caractéristiques supplémentaires suivantes :
- la voie d'émission est conçue en outre pour former chacune des impulsions comme une superposition de plusieurs composantes spectrales d'impulsion qui sont émises simultanément, disjointes spectralement et associées une-à-une à des valeurs centrales différentes de longueur d'onde, et
- le système est adapté pour que la valeur du décalage fréquentiel qui est déterminée par le module d'analyse spectrale résulte de plusieurs contributions de détection hétérodyne qui correspondent respectivement aux composantes spectrales des impulsions de la série.

Dans le cadre de l'invention, on entend par composantes spectrales d'impulsion qui sont disjointes spectralement des composantes du spectre de chaque impulsion entre lesquelles une intensité spectrale de l'impulsion devient inférieure à 5%, de préférence inférieure à 1 %, d'une valeur maximale d'intensité spectrale de chaque composante spectrale d'impulsion.

Ainsi, chaque impulsion peut avoir une valeur de puissance-crête qui est supérieure à un seuil convenu de diffusion Brillouin stimulée, alors que chaque composante spectrale d'impulsion possède séparément une valeur individuelle de puissance-crête qui est inférieure au seuil de diffusion Brillouin stimulée. Autrement dit, la limitation sur la puissance-crête d'émission qui est causée par une réalisation à base de fibres optiques de la voie d'émission est satisfaite, tout en permettant que chaque impulsion ait une valeur d'énergie qui est augmentée. Pour cette raison, l'invention est particulièrement adaptée lorsque le système LIDAR utilise une technologie de fibres optiques pour sa voie d'émission.

En outre, toutes les contributions de détection hétérodyne qui correspondent respectivement aux composantes spectrales des impulsions participent à l'obtention de la valeur du décalage fréquentiel, qui est attribué à l'effet Doppler produit par le mouvement de la cible. Ainsi, le système de l'invention possède un fonctionnement dans lequel la fréquence PRF qui est effective est multipliée par le nombre des composantes spectrales disjointes dans chaque impulsion, tout en conservant une portée L du système LIDAR qui est inchangée. L'invention procure ainsi une amélioration supplémentaire du rapport signal-sur-bruit qui est relatif au signal de détection hétérodyne. La précision sur la valeur qui est obtenue pour le décalage fréquentiel d'effet Doppler est augmentée en conséquence. Selon un autre point de vue, pour une valeur de la portée L qui est constante, et en conservant une précision identique des résultats de mesure, le système LIDAR de l'invention peut permettre de réduire le temps d'accumulation du signal de détection hétérodyne d'un facteur qui est égal au nombre des composantes spectrales d'impulsions qui sont disjointes spectralement et constituent chaque impulsion qui est émise.

De façon générale pour l'invention, il n'est pas nécessaire que les impulsions qui sont émises successivement par le système LIDAR, chacune à plusieurs composantes spectrales qui sont disjointes spectralement, soient identiques. Ainsi, deux impulsions peuvent différer l'une de l'autre par les valeurs de longueur d'onde moyenne de certaines au moins de leurs composantes spectrales, notamment différer par l'écart qui existe entre les composantes spectrales, d'une impulsion à une autre. Ainsi, la composition des impulsions à plusieurs composantes spectrales peut varier au cours de la série des impulsions qui sont émises pour effectuer une séquence de mesure, soit périodiquement selon l'invention revendiquée soit aléatoirement au cours de cette série qui n'est pas couverte par le texte des revendications. Grâce à une telle différenciation entre les impulsions qui sont émises successivement, il est possible d'augmenter la portée du système LIDAR tout en conservant une valeur constante de fréquence de répétition des impulsions, ou PRF pour «Pulse Répétition Frequency» en anglais. En effet, il est nécessaire qu'une impulsion de rayonnement qui a été émise en direction de la cible soit détectée en retour avant d'émettre l'impulsion suivante, si les deux impulsions sont identiques, afin de corréler chaque partie de rayonnement détectée avec l'instant correct d'émission d'impulsion, pour en déduire la valeur de distance d'éloignement de la cible. Autrement dit, lorsque les impulsions successives sont identiques, la fréquence PRF est limitée par la portée L qui est prescrite pour le système LIDAR selon la formule : PRF < C/(2·L), où C est la vitesse de la lumière. Utiliser des impulsions successives qui sont différentes permet donc d'augmenter la portée L du système LIDAR à valeur égale de la fréquence PRF, ou d'augmenter la valeur de fréquence PRF à portée constante L du système LIDAR. La durée individuelle de chaque séquence de mesure peut ainsi être réduite. Lorsque plusieurs compositions spectrales différentes sont utilisées pour les impulsions, en étant répétées périodiquement, la durée individuelle de chaque séquence de mesure peut ainsi être divisée par le nombre des compositions spectrales différentes, à portée constante L du système LIDAR.

La voie d'émission du système LIDAR de l'invention peut comprendre :
- une source d'émission laser, qui est adaptée pour produire un rayonnement laser initial, ce rayonnement laser initial étant de préférence monochromatique ou quasi-monochromatique ;
- un modulateur de génération de peigne, qui est disposé pour modifier le rayonnement laser initial conformément à un signal de modulation appliqué à une entrée de commande de ce modulateur de génération de peigne ; et
- un générateur de signaux de modulation, qui est connecté pour appliquer le signal de modulation à l'entrée de commande du modulateur de génération de peigne.
Le signal de modulation est alors tel que le rayonnement laser initial soit transformé par le modulateur de génération de peigne en un ensemble des composantes spectrales qui sont destinées à former une-à-une les composantes spectrales d'impulsions. Autrement dit, le rayonnement optique qui sort du modulateur possède une structure spectrale en peigne.

Dans des premiers modes de réalisation de l'invention, une entrée de référence de la voie de détection peut être connectée à une sortie secondaire de la voie d'émission pour recevoir un signal optique de référence qui comporte des composantes spectrales de référence correspondant une-à-une aux composantes spectrales des impulsions, avec un décalage spectral entre chaque composante spectrale d'impulsion et celle des composantes spectrales de référence qui lui correspond, qui est identique pour toutes les composantes spectrales d'impulsions. De cette façon, les contributions de détection hétérodyne qui sont associées aux composantes spectrales d'impulsions dans le signal de détection hétérodyne tel que produit par la voie de détection, sont toutes superposées spectralement. Autrement dit, le signal de détection hétérodyne est formé spectralement par un pic unique qui regroupe toutes les contributions produites par la pluralité des composantes spectrales d'impulsions. Pour de tels premiers modes de réalisation, la sortie secondaire de la voie d'émission, qui est connectée à l'entrée de référence de la voie de détection, peut être située dans la voie d'émission en aval du modulateur de génération de peigne, par rapport à un sens de propagation du rayonnement dans la voie d'émission.

Dans des seconds modes de réalisation de l'invention, l'entrée de référence de la voie de détection peut être connectée à une sortie secondaire de la voie d'émission qui est située différemment, pour recevoir un signal optique de référence qui est monochromatique ou quasi-monochromatique. Alors, les contributions de détection hétérodyne qui sont associées aux composantes spectrales d'impulsions dans le signal de détection hétérodyne tel que produit par la voie de détection, sont décalées spectralement les unes par rapport aux autres conformément à une répartition des composantes spectrales d'impulsions. Dans ce cas, le module d'analyse spectrale est adapté pour déduire la valeur du décalage fréquentiel d'effet Doppler à partir de valeurs de fréquence centrale qui sont relatives respectivement à chacune des contributions de détection hétérodyne. Pour de tels seconds modes de réalisation, la sortie secondaire de la voie d'émission, qui est connectée à l'entrée de référence de la voie de détection, peut être située dans la voie d'émission en amont du modulateur de génération de peigne, par rapport au sens de propagation du rayonnement dans cette voie d'émission.

Dans des modes préférés de réalisation de l'invention, l'une au moins des caractéristiques additionnelles suivantes peut être reproduite optionnellement, seule ou en combinaison de plusieurs d'entre elles :
- le système LIDAR peut être adapté pour fournir une estimation d'une composante de vitesse aéraulique lorsque le système est dirigé pour émettre les impulsions de rayonnement vers une portion d'atmosphère qui contient des particules en suspension formant la cible, les particules étant rétro-diffusantes pour le rayonnement ;
- la voie d'émission peut être conçue en outre pour que les composantes spectrales de chaque impulsion soient disjointes spectralement d'au moins 10 MHz, de préférence au moins 20 MHz, et d'au plus 2000 MHz ;
- la voie d'émission peut être conçue en outre pour que des écarts spectraux qui existent entre deux quelconques des composantes spectrales d'impulsion qui sont voisines spectralement, soient constants entre des paires différentes de composantes spectrales d'impulsion voisines ;
- la voie d'émission peut être conçue en outre pour qu'un nombre des composantes spectrales d'impulsion disjointes spectralement qui constituent chaque impulsion, soit compris entre 2 et 20, de préférence entre 4 et 12 ;
- chaque composante spectrale d'impulsion peut être monochromatique ou quasi-monochromatique ;
- le modulateur de génération de peigne, lorsqu'un tel modulateur est utilisé, peut être un modulateur électro-optique ;
- le générateur de signaux de modulation, lorsqu'un tel générateur est utilisé, peut être un générateur électrique de formes d'ondes arbitraires ; et
- la voie d'émission et/ou la voie de détection peut être réalisée par une technologie de fibres optiques, pour connecter entre eux des composants de cette voie d'émission et/ou voie de détection.

### Brève description des figures

Les caractéristiques et avantages de la présente invention apparaîtront plus clairement dans la description détaillée ci-après d'exemples de réalisation non-limitatifs, en référence aux figures annexées parmi lesquelles :
[Fig. 1a] est un schéma synoptique d'un dispositif LIDAR à impulsions et détection hétérodyne tel que connu de l'art antérieur ;
[Fig. 1b] regroupe deux diagrammes spectraux relatifs à un fonctionnement du système LI DAR de [Fig. 1a] ;
[Fig. 2] est un diagramme temporel qui montre une composition spectrale d'impulsions possible pour un fonctionnement d'un système LIDAR qui n'est pas compris dans la portée des revendications;
[Fig. 3a] correspond à [Fig. 1a] pour un premier mode de réalisation de l'invention ;
[Fig. 3b] correspond à [Fig. 1b] pour le système LIDAR du premier mode de réalisation de l'invention de [Fig. 3a] ;
[Fig. 4a] correspond à [Fig. 1a] pour un second mode de réalisation de l'invention ;
[Fig. 4b] correspond à [Fig. 1b] pour le système LIDAR du second mode de réalisation de l'invention de [Fig. 4a] ; et
[Fig. 5] correspond à [Fig. 2] pour un autre mode de réalisation de l'invention.

### Description détaillée de l'invention

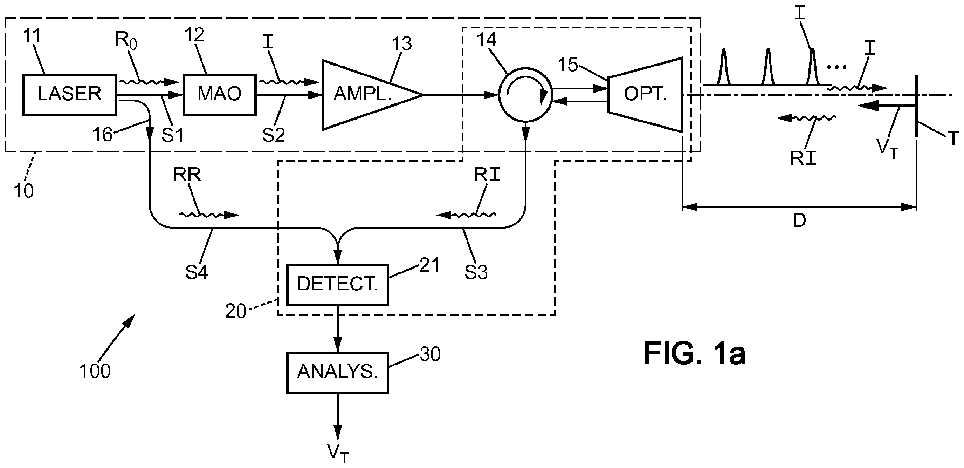

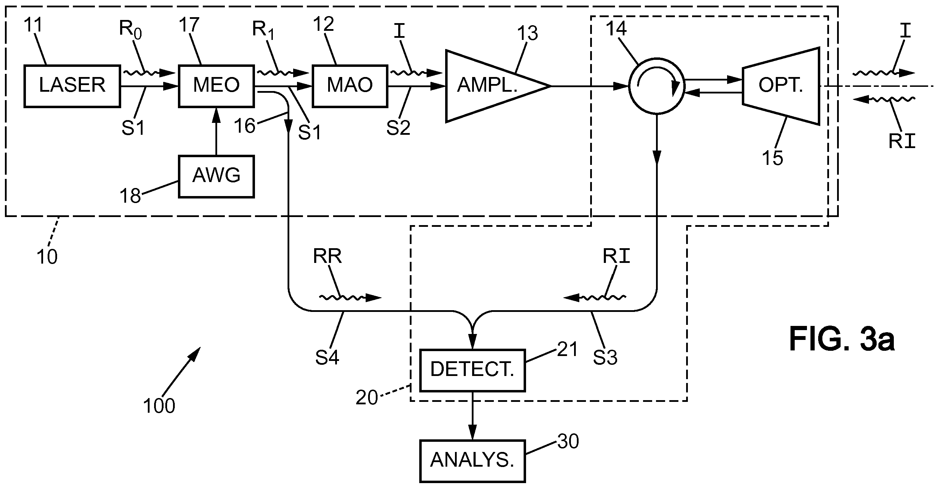

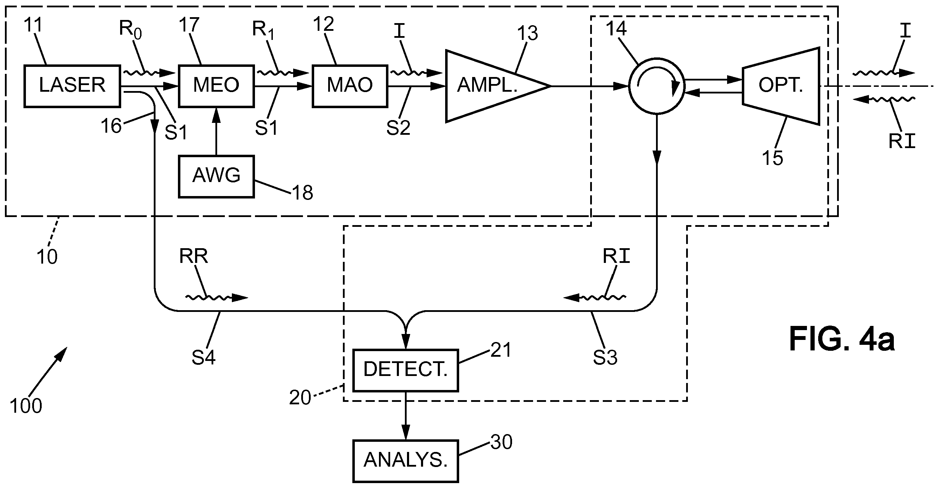

Dans ces figures, tous les composants sont représentés symboliquement, et des références identiques qui sont indiquées dans des figures différentes désignent des éléments identiques ou qui ont des fonctions identiques. Par souci de clarté, des composants dont l'utilisation dans un système LIDAR est connue de l'Homme du métier, et qui ne sont pas directement concernés par l'invention, ne sont pas décrits dans la suite. Dans ce cas, leur adaptation éventuelle à l'invention est à la portée de cet Homme du métier. Dans [Fig. 1a], [Fig. 3a] et [Fig. 4a], les références utilisées suivantes ont les significations qui sont indiquées maintenant :
- 100: système LIDAR à impulsions et détection hétérodyne désigné globalement,
- 10: voie d'émission,
- 11: source d'émission laser, notée LASER,
- 12: modulateur de décalage en fréquence et de découpage des impulsions, noté MAO,
- 13: amplificateur optique, noté AMPL.,
- 14: circulateur optique,
- 15: optique d'émission, noté OPT.,
- 16: sortie secondaire de la voie d'émission,
- 20: voie de détection,
- 21: détecteur hétérodyne, noté DETECT.,
- 30: module d'analyse spectrale, noté ANALYS.

[Fig. 1a] montre un système 100 tel que connu avant la présente invention.

La voie d'émission 10 comprend la source d'émission laser 11, le modulateur 12, l'amplificateur optique 13, le circulateur optique 14 et l'optique d'émission 15. La source d'émission laser 11 peut être d'un type à émission continue, avec une longueur d'onde d'émission d'environ 1550 nm (nanomètre) et une puissance de 600 µJ (microjoule), par exemple. Elle produit ainsi un rayonnement laser initial R₀ qui est monochromatique ou quasi-monochromatique. Ce rayonnement laser initial R₀ est transmis au modulateur 12. Le modulateur 12 peut être de type modulateur acousto-optique. Il est contrôlé pour former à partir du rayonnement reçu par lui, des impulsions I identiques de durées individuelles pouvant être comprises entre 200 ns (nanoseconde) et 800 ns, avec une fréquence de répétition des impulsions, PRF, qui peut être 10 kHz (kilohertz), par exemple. Simultanément, le modulateur 12 peut être contrôlé pour décaler la fréquence optique du rayonnement en lui appliquant un décalage fréquentiel Δν₀, qui peut être égal à 100 MHz (mégahertz) par exemple. Les impulsions I qui sont ainsi produites par le modulateur 12 sont amplifiées par l'amplificateur optique 13, puis transmises à l'optique d'émission 15 via le circulateur optique 14. L'optique d'émission 15 peut posséder une structure de télescope, par exemple. Les impulsions I amplifiées sont ainsi transmises en direction d'une cible T, qui est externe au système LIDAR 100 et située à une distance d'éloignement D de celui-ci, mesurée selon la direction d'émission du système 100. Par principe, la distance d'éloignement D est inférieure à la portée L du système 100, cette dernière pouvant être égale à environ 15 km (kilomètre) à titre d'exemple.

Toutes les impulsions I qui sont émises ainsi par le système 100 de [Fig. 1a] sont identiques et monochromatiques ou quasi-monochromatiques.

La sortie secondaire 16 est située dans la voie d'émission 10 entre la source d'émission laser 11 et le modulateur 12 de décalage et de découpage des impulsions I.

La voie de détection 20 partage l'optique d'émission 15 et le circulateur optique 14 avec la voie d'émission 10, et comprend en outre le détecteur hétérodyne 21. Au sein de la voie de détection 20, l'optique 15 a une fonction de collecte de parties RI des impulsions I qui ont été rétroréfléchies ou rétrodiffusées par la cible T. Le détecteur hétérodyne 21 est couplé optiquement pour recevoir les parties d'impulsions RI rétroréfléchies ou rétrodiffusées qui ont été collectées par l'optique 15, via le circulateur optique 14, et pour recevoir simultanément un signal optique de référence RR qui est prélevé de la voie d'émission 10 par la sortie secondaire 16 de cette voie d'émission. Autrement dit, cette sortie secondaire 16 est couplée optiquement au détecteur hétérodyne 21 en plus de la sortie du circulateur optique 14 qui est dédiée à la voie de détection 20. Le détecteur hétérodyne 21 peut être une photodiode, notamment de type photodiode ultrarapide, sur laquelle sont focalisés le signal optique de référence RR qui provient de la sortie secondaire 16 et les parties d'impulsions RI qui proviennent de la cible T.

Le module d'analyse spectrale 30 est configuré pour analyser spectralement les signaux de détection hétérodyne qui sont produits par le détecteur 21 lors d'un fonctionnement du système 100. Il configuré pour déduire de cette analyse spectrale une valeur d'un décalage fréquentiel qui existe entre le signal optique de référence RR et les parties d'impulsions RI. Il est configuré en outre pour convertir la valeur du décalage fréquentiel qui a été obtenue ainsi en une valeur de composante de vitesse V_{T} de la cible T, parallèle à la direction d'émission du système 100. De façon connue : V_{T} = -λ₀·(νₘ-Δν₀)/2, où :
λ₀ désigne la longueur d'onde de la source d'émission laser 11, égale à 1550 nm environ dans l'exemple donné plus haut,
Δν₀ désigne encore le décalage fréquentiel qui est appliqué par le modulateur 12, égal à 100 MHz dans l'exemple donné plus haut, et
νₘ est une fréquence du domaine radiofréquence, ou domaine RF, qui est associée à une intensité maximale ou à une position centrale de pic dans la décomposition spectrale du signal de détection hétérodyne.

Le système 100 est réalisé de préférence en utilisant une technologie de fibres optiques. Dans ce cas, l'amplificateur optique 13 peut être du type désigné par EDFA, pour «Erbium-Doped Fiber Amplifier» en anglais, ou amplificateur à fibre dopée à l'erbium. Le rayonnement laser initial R₀ est transmis par un premier segment S1 de fibre optique de la source d'émission laser 11 au modulateur 12, puis de ce dernier à l'amplificateur 13 par un deuxième segment S2 de fibre optique. En outre, les parties d'impulsions RI rétroréfléchies ou rétrodiffusées qui sont collectées par l'optique 15 sont injectées dans un troisième segment S3 de fibre optique à la sortie du circulateur optique 14 pour les amener au détecteur hétérodyne 21. En parallèle, la sortie secondaire 16 de la voie d'émission 10 est réalisée par un coupleur à fibres, et reliée au détecteur hétérodyne 21 par un quatrième segment S4 de fibre optique.

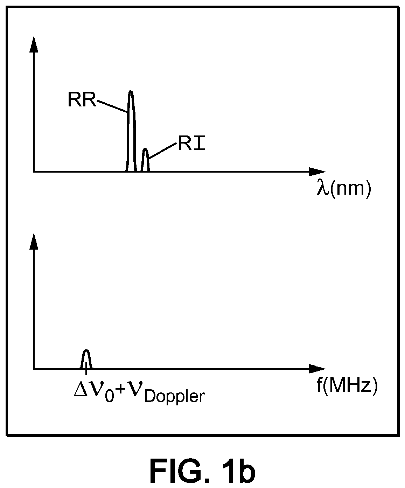

Pour un fonctionnement du système 100 qui vient d'être décrit avec une cible discrète rétroréfléchissante («retroreflecting point target» en anglais), le signal de détection hétérodyne possède une variation sinusoïdale à la fréquence νₘ. Le diagramme supérieur de [Fig. 1b] montre la composition spectrale du rayonnement qui est reçu par le détecteur hétérodyne 21. L'axe horizontal de ce diagramme supérieur de [Fig. 1b] repère les valeurs de longueur d'onde dans le domaine optique, notées λ et exprimées en nanomètres (nm). L'axe vertical, en unité arbitraire, repère les valeurs d'intensité spectrale. Le rayonnement qui est reçu par le détecteur hétérodyne 21 comprend une première contribution qui est constituée par le signal optique de référence RR amené à partir de la sortie secondaire 16, et une seconde contribution qui correspond aux parties RI des impulsions qui ont été rétroréfléchies par la cible T. Pour le système 100 de [Fig. 1a], le signal optique de référence RR est une partie du rayonnement laser initial R₀, de sorte que la contribution correspondante dans le diagramme supérieur de [Fig. 1b] est un pic très étroit, noté RR. Lorsque la cible T est située à un seul endroit sur la direction d'émission du système 100, la seconde contribution a aussi une forme de pic étroit, noté RI. Le diagramme inférieur de [Fig. 1b] montre la composition spectrale du signal de détection hétérodyne qui correspond à la composition spectrale du rayonnement reçu par le détecteur 21 telle que montrée dans le diagramme supérieur. Le signal de détection hétérodyne est alors constitué par un pic unique, dont la fréquence est νₘ=Δν₀ + ν_{Doppler}, où ν_{Doppler}≈-2·V_{T}/λ₁, λ₁ étant la valeur de longueur d'onde du rayonnement tel qu'émis par le système LlDAR 100. L'axe horizontal du diagramme inférieur de [Fig. 1b] repère les valeurs de fréquence dans le domaine RF, notées f et exprimées en mégahertz (MHz). L'axe vertical est encore en unité arbitraire pour repérer les valeurs d'intensité spectrale du signal de détection hétérodyne.

Pour un fonctionnement du système 100 qui est dédié à des mesures anémométriques, les impulsions I sont rétrodiffusées par une multiplicité de cibles qui sont réparties sur le trajet du faisceau des impulsions à l'extérieur du système 100, à partir de l'optique d'émission 15. Ces cibles, qui sont constituées par des particules ou des aérosols présents en suspension dans l'air, sont entrainées en fonction de la vitesse locale de déplacement de l'air qui existe à chaque endroit du trajet du faisceau. L'Homme du métier désigne couramment une telle répartition de cibles par «cible continue», «cible répartie» ou «cible volumique». Les parties d'impulsions RI qui sont collectées par l'optique 15 puis transmises au détecteur 21 sont étalées dans le temps, correspondant à des distances d'éloignement différentes selon la direction d'émission du système 100, où se produisent des rétrodiffusions partielles des impulsions I. Elles sont en outre décalées en fréquence de façon variable, en fonction de la vitesse locale du vent parallèlement à la direction d'émission à l'endroit où se produit chaque rétrodiffusion partielle. Le signal de détection hétérodyne possède alors des variations temporelles plus complexes. L'analyse spectrale qui en est effectuée par le module 30 est supposée connue : elle fournit en tant que résultat une série de valeurs de vitesse V_{T} qui sont attribuées une-à-une à des valeurs différentes de la distance d'éloignement D. De façon connue, la résolution en distance d'éloignement D est déterminée par la durée individuelle des impulsions émises I, en étant égale à cette durée individuelle divisée par deux fois la vitesse de propagation des impulsions à l'extérieur du système LIDAR 100. Par rapport aux diagrammes de [Fig. 1b], le pic qui correspond aux parties d'impulsions RI dans la composition spectrale du rayonnement reçu par le détecteur 21 est élargi. Le pic de la composition spectrale du signal de détection hétérodyne, dans le domaine RF, est élargi de façon corrélée.

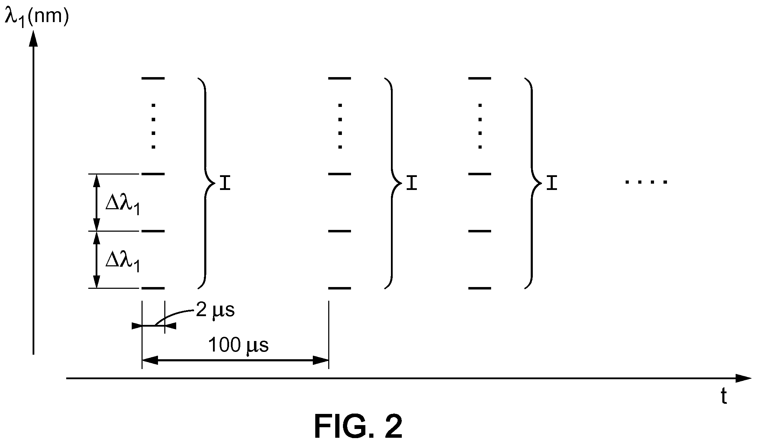

L'axe horizontal du diagramme de [Fig. 2] repère le temps, noté t, et son axe vertical repère la longueur d'onde λ₁ d'émission instantanée d'un système LIDAR 100 qui n'est pas compris dans la portée des revendications. Cette longueur d'onde λ₁ est exprimée en nanomètres (nm). Conformément à ce diagramme, chaque impulsion I telle qu'émise par le système LIDAR 100 est constituée de plusieurs composantes spectrales d'impulsion qui sont simultanées, et par conséquent sont superposées pour former l'impulsion. Chaque composante spectrale d'impulsion est monochromatique ou quasi-monochromatique, et chaque impulsion I peut est constituée de dix telles composantes spectrales d'impulsion, à titre d'exemple. Les écarts entre les valeurs de longueur d'onde de deux composantes spectrales d'impulsion qui sont voisines spectralement peuvent être constants, mais pas nécessairement. Ils peuvent être quelconques, mais suffisants pour que le décalage fréquentiel que possèdent les parties d'impulsions RI rétroréfléchies ou rétrodiffusées soit contenu dans tous les intervalles de séparation entre impulsions différentes. Pour cela, ces écarts sont de préférence supérieurs à 30 MHz ou 50 MHz, cette limite inférieure étant suffisante pour obtenir une réduction de la diffusion Brillouin stimulée. Lorsqu'ils sont constants, les écarts de longueur d'onde entre composantes spectrales voisines sont appelés incrément de longueur d'onde, et notés Δλ₁. L'incrément de longueur d'onde Δλ₁ correspond à un incrément fréquentiel Δν₁ qui est égal à -C·Δλ₁/λ₀². Ce dernier peut être égal à 200 MHz, à titre d'exemple, dans le domaine RF. Ainsi, chaque impulsion I est constituée spectralement par un peigne, et toutes les impulsions I qui sont émises successivement par le système LIDAR 100 sont identiques, avec cette même constitution individuelle. De telles impulsions I qui sont émises successivement peuvent avoir des durées individuelles égales à 2 µs (microseconde), et être émises toutes les 100 µs.

Dans l'exemple qui vient d'être décrit, la fréquence de répétition des impulsions I est égale 10 kHz, alors que la fréquence d'impulsions qui est effective pour mesurer des vitesses de cibles, i.e. la fréquence PRF, est égale au produit de cette fréquence de répétition des impulsions par le nombre de composantes spectrales d'impulsions dans chacune des impulsions I, soit 100 kHz.

Un tel fonctionnement conforme à l'invention peut être produit par un système LIDAR 100 tel que représenté dans [Fig. 3a]. Ce système possède une architecture matérielle qui est similaire à celle de [Fig. 1a], hormis que la voie d'émission 10 comprend en outre un modulateur supplémentaire 17 et un générateur de signaux de modulation 18. Le modulateur 17 peut être de type modulateur électro-optique, et est noté MEO. Il est inséré dans le premier segment S1 de fibre optique, entre la source d'émission laser 11 et le modulateur électro-acoustique 12. Le générateur de signaux de modulation 18 peut être de type générateur de formes d'ondes arbitraires, et est noté AWG pour «Arbitrary Waveform Generator» en anglais. Le générateur 18 est programmé pour transmettre à une entrée de commande du modulateur 17 un signal électrique de modulation qui peut être composé d'une somme de n composantes sinusoïdales, où n est un nombre entier. n peut être compris entre 1 et 9, valeurs 1 et 9 comprises, et de préférence inférieur ou égal à 5. De façon connue, un modulateur électro-optique réalise une modulation de la phase du rayonnement optique qui lui est fourni en entrée. L'amplitude de chaque composante sinusoïdale du signal électrique de modulation est proportionnelle à un paramètre d'ajustement sans dimension qui est couramment appelé profondeur de modulation. Le rayonnement laser initial R₀ qui provient de la source laser 11 est transformé ainsi par le modulateur 17 en un rayonnement R₁ qui comprend une superposition de plusieurs composantes spectrales en forme de raies disjointes. Chaque composante sinusoïdale du signal électrique de modulation produit plusieurs composantes spectrales du rayonnement R₁ qui sont symétriques, spectralement, par rapport à la valeur de longueur d'onde λ₀ du rayonnement laser initial R₀. Les positions de toutes les composantes spectrales qui sont ainsi produites dépendent du nombre des composantes sinusoïdales dans le signal électrique de modulation, et des valeurs adoptées pour leurs profondeurs de modulation respectives. Le rayonnement R₁ peut ou non comprendre encore une composante spectrale à la valeur de longueur d'onde λ₀. Bien que [Fig. 2] montre que les composantes spectrales sont équidistantes spectralement à l'intérieur de chaque impulsion I, ceci n'est pas nécessairement le cas. A titre d'exemples, les compositions suivantes sont possibles pour le signal électrique de modulation :
- une seule composante sinusoïdale de modulation, associée à la valeur de 1,44 pour sa profondeur de modulation, aboutissant à un rayonnement R₁ qui est composé principalement de trois raies disjointes spectralement et situées aux longueurs d'onde suivantes : λ₀, λ₀-Δλ₁ et λ₀-Δλ₁, où Δλ₁ est l'écart de longueur d'onde entre raies successives dans le rayonnement R₁, ces trois raies ayant des intensités respectives qui sont sensiblement identiques ;
- une seule composante sinusoïdale de modulation, associée à la valeur de 2,6 pour sa profondeur de modulation, aboutissant à un rayonnement R₁ qui est composé principalement de quatre raies disjointes spectralement et situées aux longueurs d'onde suivantes : λ₀-2·Δλ₁, λ₀-Δλ₁, λ₀-Δλ₁ et λ₀-2·Δλ₁, ces quatre raies ayant des intensités respectives qui sont encore sensiblement identiques ; et
- deux composantes sinusoïdales de modulation, par exemple avec des fréquences respectives qui sont égales à 100 MHz et 30 MHz, et toutes deux associées à la valeur de 1,44 pour leurs profondeurs de modulation respectives, aboutissant à un rayonnement R₁ qui est composé principalement de neuf raies disjointes spectralement dont les intensités respectives sont sensiblement identiques.

Le modulateur 12 applique alors le décalage fréquentiel Δν₀ à chacune des composantes spectrales du rayonnement R₁. Il applique en outre le découpage en impulsions qui sont séparées temporellement à toutes les composantes spectrales de sorte que chaque impulsion I qui est émise par la voie d'émission 10 vers l'extérieur est composée de plusieurs composantes spectrales qui sont toutes superposées pendant la durée de l'impulsion. Dans le jargon de l'Homme du métier, le rayonnement R₁ qui est produit en sortie par le modulateur 17, de même que chaque impulsion I qui est émise par le système 100, est maintenant composé d'un peigne de composantes spectrales. De préférence, l'incrément fréquentiel Δν₁ est supérieur à la somme de la largeur spectrale des composantes du signal électrique de modulation et de celle de la source laser 11, de sorte que les composantes spectrales de peigne soient disjointes spectralement.

Alternativement à l'utilisation d'un générateur de formes d'ondes arbitraires, les n composantes sinusoïdales du signal électrique de modulation peuvent être produites par une combinaison de n oscillateurs électriques analogiques. Un tel mode alternatif de génération du signal électrique de modulation peut en effet être plus simple à mettre en oeuvre.

Lorsqu'elle est rétroréfléchie, chaque composante spectrale d'impulsion est décalée spectralement du fait de l'effet Doppler. Etant donné que l'incrément fréquentiel Δν₁ est très inférieur à la fréquence optique qui correspond à la longueur d'onde λ₀, toutes les composantes spectrales d'impulsions subissent le même décalage fréquentiel d'effet Doppler ν_{Doppler}. En outre, l'incrément fréquentiel Δν₁ est choisi pour être supérieur à toutes les valeurs possiblement attendues pour le décalage fréquentiel d'effet Doppler ν_{Doppler} ajouté au décalage fréquentiel Δν₀.

La sortie secondaire 16 de la voie d'émission 10 est située entre les modulateurs 17 et 12 pour le mode de réalisation de [Fig. 3a]. De cette façon, le signal optique de référence RR qui est amené au détecteur hétérodyne 21 est une partie du rayonnement R₁. Il est donc aussi constitué par peigne d'incrément fréquentiel Δν₁.

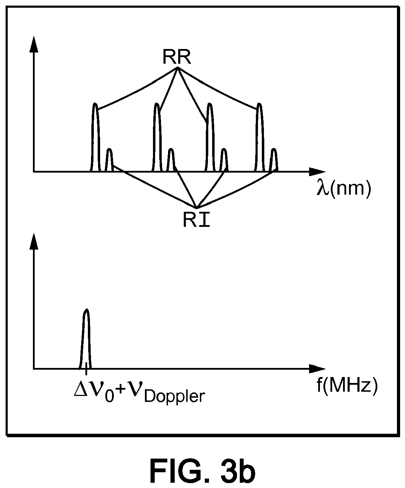

Comme montré par le diagramme supérieur de [Fig. 3b], la composition spectrale du rayonnement qui est reçu par le détecteur hétérodyne 21 comprend alors le peigne d'incrément fréquentiel Δν₁, désigné par RR, et un peigne supplémentaire, qui est désigné par RI et qui correspond aux parties d'impulsions qui ont été rétroréfléchies ou rétrodiffusées puis collectées par l'optique 15. Ce peigne supplémentaire contient l'information de mesure. Il est décalé par rapport au peigne RR de Aν₀+ν_{Doppler}, en termes de fréquence optique, en ayant aussi Δν₁ comme incrément fréquentiel. Lors de la détection hétérodyne, chaque composante spectrale du peigne RR forme une interférence avec chacune des composantes spectrales du peigne RI, mais un filtrage approprié élimine toutes les interférences entre une composante du peigne RR et une composante du peigne RI qui ne sont pas voisines spectralement, c'est-à-dire qui sont distantes l'une de l'autre de plus de 0,3·Δν₁, par exemple. Possiblement, un tel filtrage est effectué par le détecteur 21 lui-même, du fait de son temps caractéristique de réponse. Il ne reste ainsi, dans le signal de détection hétérodyne, que des contributions qui correspondent aux interférences entre chaque composante du peigne RR et celle du peigne RI qui est décalée par rapport à elle de Δν₀+ν_{Doppler}. Ces contributions sont alors superposées entre elles spectralement dans le signal de détection hétérodyne, comme cela apparaît dans le diagramme inférieur de [Fig. 3b]. Bien que ces composantes spectrales d'impulsions soient incohérentes entre elles dans les parties d'impulsions RI qui parviennent au détecteur 21, le signal de détection hétérodyne possède une valeur de rapport signal-sur-bruit calculé sur le spectre qui est augmentée par rapport au système 100 de [Fig. 1a]. Pour ce mode de réalisation de [Fig. 3a], le module d'analyse spectrale 30 peut être identique à celui du système 100 de [Fig. 1a].

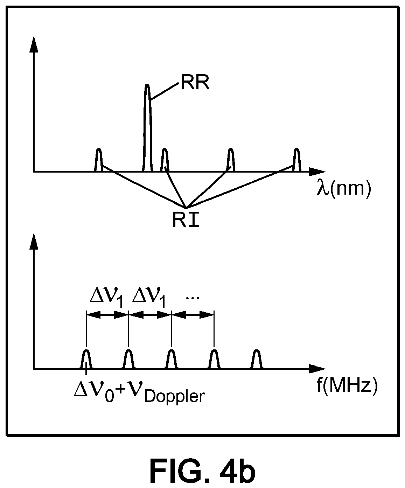

Le mode de réalisation de [Fig. 4a] se distingue de celui de [Fig. 3a] par l'emplacement de la sortie secondaire 16 dans la voie d'émission 10. Elle est maintenant située entre la source d'émission laser 11 et le modulateur de génération de peigne 17. Ce modulateur 17 et le générateur de signaux de modulation 18 peuvent être identiques à ceux du mode de réalisation de [Fig. 3a], et le signal électrique de modulation est inchangé. Les impulsions I qui sont émises par le système 100 vers l'extérieur ont donc la même composition spectrale. Par contre, le signal optique de référence RR qui est amené à partir de la nouvelle sortie secondaire 16 est identique à celui qui intervient dans le système 100 de [Fig. 1a]. Comme le montre le diagramme supérieur de [Fig. 4b], le spectre du rayonnement qui est reçu par le détecteur hétérodyne 21 comprend le pic RR qui correspond à l'émission de la source d'émission laser 11, et le peigne qui est formé par les parties d'impulsions RI rétroréfléchies ou rétrodiffusées qui ont été collectées. Ce second peigne est encore désigné par Rl. Chaque composante spectrale du peigne RI correspond encore aux composantes spectrales d'impulsions, affectées par le décalage fréquentiel ν_{Doppler}. Ces composantes spectrales sont encore incohérentes dans les parties d'impulsions RI rétroréfléchies ou rétrodiffusées qui ont été collectées. Lorsque le détecteur hétérodyne 21 possède un temps de réponse suffisamment court, le signal de détection hétérodyne est composé des interférences de la composante spectrale du pic RR avec chacune des composantes spectrales du peigne RI. Le signal de détection hétérodyne est alors composé de plusieurs composantes spectrales, dont les valeurs de fréquence centrale RF sont Δν₀+ν_{Doppler}+i·Δν₁, où i est un indice entier qui repère les composantes spectrales du signal de détection hétérodyne. Cette composition spectrale du signal de détection hétérodyne est montrée par le diagramme inférieur de [Fig. 4b]. Le module d'analyse spectrale 30 détermine la valeur du décalage fréquentiel d'effet Doppler ν_{Doppler} d'après les valeurs de fréquence RF qui sont mesurées pour les valeurs centrales Δν₀+ν_{Doppler}+i·Δν₁. Par exemple, une valeur élémentaire est déterminée pour ν_{Doppler} à partir de chacune des valeurs centrales Δν₀+ν_{Doppler}+i·Δν₁, et la valeur finale de ν_{Doppler} est calculée en effectuant une moyenne des valeurs élémentaires. Possiblement, des valeurs de fréquence RF qui correspondent aux valeurs maximales d'intensité des pics RI dans le spectre du signal de détection hétérodyne peuvent être utilisées à la place des valeurs de fréquence centrale des mêmes pics, afin de déterminer les valeurs élémentaires de ν_{Doppler} qui sont déduites des positions individuelles des pics RI.

Bien que la mise en oeuvre de la résolution en distance n'ait pas été décrite en liaison avec les modes de réalisation de [Fig. 3a] et [Fig. 4a], pour obtenir des résultats de mesure de vitesse qui sont relatifs à des valeurs échantillonnées de distance d'éloignement, le principe d'obtention d'une telle résolution en distance peut être repris tel qu'il a été rappelé pour le système 100 de [Fig. 1a].

Pour les modes de réalisation de [Fig. 3a] et [Fig. 4a], chaque composante spectrale d'impulsion peut avoir une valeur individuelle de puissance-crête qui est juste inférieure à un seuil de diffusion de Brillouin stimulée qui se produit dans les segments de fibre optique S1 et S2 ainsi que dans l'amplificateur optique 13, le circulateur optique 14 et les segments de fibre optique entre ceux-ci et jusqu'à l'optique d'émission 15. La puissance de chaque impulsion I qui est émise par le système 100 vers l'extérieur pour réaliser une mesure de vitesse, est multipliée par le nombre n_{comp} des composantes spectrales mises en oeuvre dans chaque impulsion, par rapport au système de [Fig. 1a]. Une amélioration d'un facteur n_{comp}^{1/2} est ainsi obtenue pour le fonctionnement du système LIDAR à détection hétérodyne. Les systèmes LIDAR à impulsions et détection hétérodyne conformes à l'invention sont donc particulièrement adaptés à des conditions de mesure où les parties d'impulsions rétroréfléchies ou rétrodiffusées ont des puissances faibles ou très faibles. Ils sont donc tout spécialement appropriés pour effectuer des mesures anémométriques.

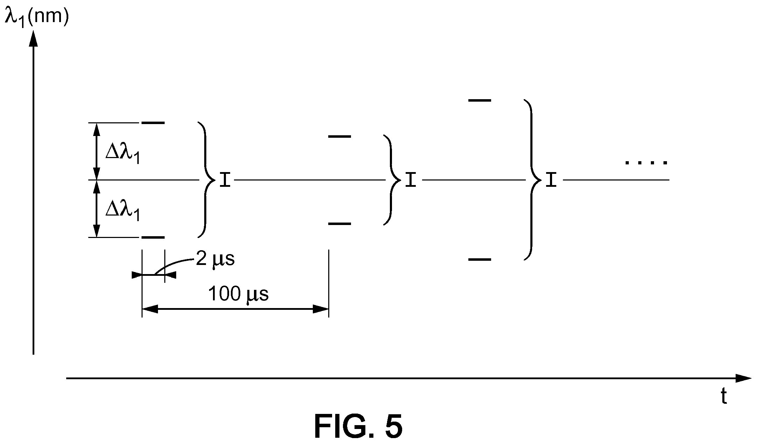

Dans les modes de réalisation non couverts par le texte des revendications qui ont été décrits précédemment, les compositions spectrales respectives des impulsions émises successivement par le système LIDAR sont identiques. Mais cette caractéristique n'est pas nécessaire à l'invention. [Fig. 5] montre une série d'impulsions I qui sont émises successivement par le système LIDAR, pour laquelle chaque impulsion I est constituée de deux composantes spectrales disjointes et séparées par l'écart de longueur d'onde 2·Δλ₁. Cet écart spectral inter-composante 2·Δλ₁ varie entre deux impulsions I qui sont successives, selon l'invention revendiquée périodiquement au cours de la série complète des impulsions I. L'utilisation d'une telle série d'impulsions de compositions spectrales variables est compatible avec les deux modes de réalisation de systèmes LIDAR conformes à l'invention de [Fig. 3a] et [Fig. 4a]. La série d'impulsions émises qui est illustrée par [Fig. 5] est obtenue dans les deux cas par une commande appropriée du modulateur électro-optique 17. Bien que [Fig. 5] ne montre que deux composantes spectrales par impulsion, le nombre de composantes spectrales par impulsion peut être supérieur. En particulier, mais facultativement, la commande du modulateur électro-optique 17 peut être conçue pour que le rayonnement R₁ tel qu'issu directement du modulateur 17 avant d'être transmis au modulateur acousto-optique 12, soit dépourvu de composante spectrale d'amplitude significative à la valeur de longueur d'onde λ₀ de la source d'émission laser 11.

Il est entendu que l'invention peut être reproduite en modifiant des aspects secondaires des modes de réalisation qui ont été décrits en détail ci-dessus, tout en conservant certains au moins des avantages cités. Notamment, les modifications suivantes sont possibles :
- certains des composants utilisés dans les modes de réalisation décrits peuvent être remplacés par d'autres composants ou par des combinaisons de composants qui produisent des fonctions équivalentes. Par exemple, chaque modulateur électro-optique peut être remplacé par un amplificateur optique à semiconducteur, ou SOA pour «Semiconductor Optical Amplifier» en anglais, utilisé en tant que modulateur ;
- de façon générale pour l'invention, il n'est pas nécessaire que les composantes spectrales d'impulsion qui sont disjointes spectralement pour constituer chaque impulsion qui est émise par le système LIDAR, aient des intensités respectives de composantes qui sont égales. Autrement dit, les composantes spectrales d'impulsion qui sont disjointes spectralement pour constituer chaque impulsion peuvent avoir des intensités spectrales maximales ou des intensités totales respectives qui sont différentes d'une composante à l'autre dans la même impulsion émise ; et
- toutes les valeurs numériques qui ont été citées ne l'ont été qu'à titre d'illustration, et peuvent être changées en fonction de l'application considérée du système LIDAR à impulsions et à détection hétérodyne.

## Revendications

1. Système LIDAR (100) à impulsions, adapté pour déterminer une valeur d'un décalage fréquentiel d'effet Doppler (ν_{Doppler}) qui est subi par une série d'impulsions (I) de rayonnement émises successivement par le système en direction d'une cible (T), entre des parties des impulsions telles que reçues après rétro-réflexion ou rétrodiffusion sur la cible et lesdites impulsions telles qu'émises par le système, et pour fournir, à partir de la valeur déterminée pour le décalage fréquentiel, une estimation d'une composante de vitesse (V_{T}) de la cible qui est parallèle à une direction d'émission optique du système,
le système (100) comprenant :
- une voie d'émission (10), conçue pour produire la série d'impulsions (I),
- une voie de détection (20), conçue pour détecter les parties des impulsions (RI) reçues après rétro-réflexion ou rétrodiffusion sur la cible (T), et pour produire des signaux de détection hétérodyne qui correspondent aux impulsions (I) de la série,
- un module d'analyse spectrale (30), adapté pour effectuer une analyse spectrale des signaux de détection hétérodyne, de sorte que la valeur du décalage fréquentiel (ν_{Doppler}) résulte de contributions de détection hétérodyne qui correspondent aux impulsions (I) de la série, et
la voie d'émission (10) étant conçue en outre pour former chacune des impulsions (I) comme une superposition de plusieurs composantes spectrales d'impulsion qui sont émises simultanément, disjointes spectralement et associées une-à-une à des valeurs centrales différentes de longueur d'onde, et
le système (100) étant adapté pour que la valeur du décalage fréquentiel (ν_{Doppler}) qui est déterminée par le module d'analyse spectrale (30) résulte de plusieurs contributions de détection hétérodyne qui correspondent respectivement aux composantes spectrales des impulsions (I) de la série,
le système (100) étant **caractérisé en ce qu'**il est adapté en outre pour que les composantes spectrales disjointes de deux impulsions (I) qui sont émises successivement soient séparées par un écart spectral inter-composante qui varie entre lesdites deux impulsions successives, et pour que ledit écart spectral inter-composante varie périodiquement au cours de la série complète des impulsions.

2. Système LIDAR (100) à impulsions selon la revendication 1, adapté pour fournir une estimation d'une composante de vitesse aéraulique lorsque le système est dirigé pour émettre les impulsions (I) de rayonnement vers une portion d'atmosphère qui contient des particules en suspension formant la cible (T), les particules étant rétro-diffusantes pour ledit rayonnement.

3. Système LIDAR (100) à impulsions selon la revendication 1 ou 2, dans lequel la voie d'émission (10) est conçue en outre pour que les composantes spectrales de chaque impulsion (I) soient disjointes spectralement d'au moins 10 MHz, de préférence au moins 20 MHz, et d'au plus 2000 MHz.

4. Système LIDAR (100) à impulsions selon l'une quelconque des revendications précédentes, dans lequel la voie d'émission (10) est conçue en outre pour que des écarts spectraux (Δν₁) qui existent entre deux quelconques des composantes spectrales d'impulsion qui sont voisines spectralement, soient constants entre des paires différentes de composantes spectrales d'impulsion voisines.

5. Système LIDAR (100) à impulsions selon l'une quelconque des revendications précédentes, dans lequel la voie d'émission (10) est conçue en outre pour qu'un nombre des composantes spectrales d'impulsion disjointes spectralement qui constituent chaque impulsion (I) soit compris entre 2 et 20, de préférence entre 4 et 12.

6. Système LIDAR (100) à impulsions selon l'une quelconque des revendications précédentes, dans lequel la voie d'émission (10) comprend :
- une source d'émission laser (11), qui est adaptée pour produire un rayonnement laser initial (R₀) ;
- un modulateur de génération de peigne (17), qui est disposé pour modifier le rayonnement laser initial (R₀) conformément à un signal de modulation appliqué à une entrée de commande dudit modulateur de génération de peigne ; et
- un générateur de signaux de modulation (18), qui est connecté pour appliquer le signal de modulation à l'entrée de commande du modulateur de génération de peigne (17), ledit signal de modulation étant tel que le rayonnement laser initial (R₀) soit transformé par le modulateur de génération de peigne (17) en un ensemble de composantes spectrales qui sont destinées à former une-à-une les composantes spectrales d'impulsions.

7. Système LIDAR (100) à impulsions selon la revendication 6, dans lequel le modulateur de génération de peigne (17) est de type électro-optique, et la série des impulsions (I) avec l'écart spectral inter-composante qui varie entre deux impulsions émises successivement est obtenue par une commande du modulateur électro-optique de génération de peigne.

8. Système LIDAR (100) à impulsions selon la revendication 7, dans lequel la commande du modulateur électro-optique de génération de peigne (17) est conçue pour que le rayonnement (R₁) tel qu'issu directement dudit modulateur, avant d'être transmis à un modulateur de décalage en fréquence et découpage en impulsions de type acousto-optique (12), soit dépourvu de composante spectrale à une valeur de longueur d'onde d'émission de la source d'émission laser (11).

9. Système LIDAR (100) à impulsions selon l'une quelconque des revendications 1 à 8, dans lequel une entrée de référence de la voie de détection (20) est connectée à une sortie secondaire (16) de la voie d'émission (10) pour recevoir un signal optique de référence (RR) qui comporte des composantes spectrales de référence correspondant une-à-une aux composantes spectrales des impulsions (I), avec un décalage spectral (Δν₀) entre chaque composante spectrale d'impulsion et la composante spectrale de référence qui correspond à ladite composante spectrale d'impulsion, qui est identique pour toutes les composantes spectrales d'impulsions,
de sorte que les contributions de détection hétérodyne qui sont associées aux composantes spectrales d'impulsions dans le signal de détection hétérodyne tel que produit par la voie de détection (20) soient toutes superposées spectralement.

10. Système LIDAR (100) à impulsions selon la revendication 9 et l'une quelconque des revendications 6 à 8, dans lequel la sortie secondaire (16) de la voie d'émission (10) est située dans ladite voie d'émission en aval du modulateur de génération de peigne (17), par rapport à un sens de propagation du rayonnement dans ladite voie d'émission.

11. Système LIDAR (100) à impulsions selon l'une quelconque des revendications 1 à 8, dans lequel une entrée de référence de la voie de détection (20) est connectée à une sortie secondaire (16) de la voie d'émission (10) pour recevoir un signal optique de référence (RR) qui est monochromatique,
de sorte que les contributions de détection hétérodyne qui sont associées aux composantes spectrales d'impulsions dans le signal de détection hétérodyne tel que produit par la voie de détection (20), soient décalées spectralement les unes par rapport aux autres conformément à une répartition des composantes spectrales d'impulsions,
et dans lequel le module d'analyse spectrale (30) est adapté pour déduire la valeur du décalage fréquentiel d'effet Doppler (ν_{Doppler}) à partir de valeurs de fréquence centrale qui sont relatives respectivement à chacune des contributions de détection hétérodyne.

12. Système LIDAR (100) à impulsions selon la revendication 11 et l'une quelconque des revendications 6 à 8, dans lequel la sortie secondaire (16) de la voie d'émission (10) est située dans ladite voie d'émission en amont du modulateur de génération de peigne (17), par rapport à un sens de propagation du rayonnement dans ladite voie d'émission.

13. Système LIDAR (100) à impulsions selon l'une quelconque des revendications précédentes, dans lequel la voie d'émission (10) et/ou la voie de détection (20) est réalisée par une technologie de fibres optiques, pour connecter entre eux des composants de ladite voie d'émission et/ou voie de détection.

## Patentansprüche

1. Gepulstes LIDAR-System (100), das dazu eingerichtet ist, einen Wert einer Dopplereffekt-Frequenzverschiebung (*ν*_{Doppler}), der eine Reihe von nacheinander vom System in Richtung eines Ziels (T) emittierten Strahlungsimpulsen (I) unterworfen ist, zwischen Teilen der Impulse, wie nach Rückreflexion oder Rückstreuung am Ziel empfangenen Impulsen, und den Impulsen, wie durch das System emittierten Impulsen, zu bestimmen und um aus dem für die Frequenzverschiebung bestimmten Wert eine Schätzung einer Geschwindigkeitskomponente (V_{T}) des Ziels, die parallel zu einer optischen Emissionsrichtung des Systems ist, bereitzustellen, wobei das System (100) umfasst:
- einen Emissionspfad (10), der zum Erzeugen der Impulsreihe (I) eingerichtet ist,
- einen Detektionspfad (20), der zum Detektieren der Teile der nach Rückreflexion oder Rückstreuung am Ziel (T) empfangenen Impulse (RI) und Erzeugen der Heterodyndetektionssignale, die den Impulsen (I) der Reihe entsprechen, eingerichtet ist,
- ein Spektralanalysemodul (30), das dazu eingerichtet ist, eine Spektralanalyse der Heterodyndetektionssignale durchzuführen, so dass der Wert der Frequenzverschiebung (*ν*_{Doppler}) aus Heterodyndetektionsbeiträgen, die den Impulsen (I) der Serie entsprechen, resultiert, und
wobei der Emissionspfad (10) ferner dazu eingerichtet ist, jeden der Impulse (I) als Überlagerung mehrerer Impulsspektralkomponenten zu bilden, die gleichzeitig, spektral disjunkt und eins zu eins verschiedenen Zentralwerten der Wellenlänge zugeordnet emittiert werden, und
wobei das System (100) so eingerichtet ist, dass der Wert der Frequenzverschiebung (*ν*_{Doppler}), der durch das Spektralanalysemodul (30) bestimmt wird, aus mehreren Heterodyndetektionsbeiträgen resultiert, die jeweils den spektralen Komponenten der Impulse (I) der Reihe entsprechen,
wobei das System (100) **dadurch gekennzeichnet ist, dass** es ferner so eingerichtet ist, dass die disjunkten Spektralkomponenten von zwei Impulsen (I), die nacheinander emittiert werden, durch einen spektralen Abstand zwischen den Komponenten getrennt sind, der zwischen den beiden aufeinanderfolgenden Impulsen variiert, und dass der spektrale Abstand zwischen den Komponenten im Verlauf der kompletten Impulsreihe periodisch variiert.

2. Gepulstes LIDAR-System (100) nach Anspruch 1, das dazu eingerichtet ist, eine Schätzung einer Luftgeschwindigkeitskomponente bereitzustellen, wenn das System darauf ausgerichtet ist, die Strahlungsimpulse (I) in Richtung eines Abschnitts der Atmosphäre zu emittieren, der suspendierte Teilchen enthält, die das Ziel bilden (T), wobei die Teilchen diese Strahlung rückstreuend wirken.

3. Gepulstes LIDAR-System (100) nach Anspruch 1 oder 2, wobei der Emissionspfad (10) ferner so eingerichtet ist, dass die Spektralkomponenten jedes Impulses (I) spektral um mindestens 10 MHz, vorzugsweise mindestens 20 MHz, und höchstens 2000 MHz. disjunkt sind.

4. Gepulstes LIDAR-System (100) nach einem der vorstehenden Ansprüche, wobei der Emissionspfad (10) ferner so eingerichtet ist, dass spektrale Abstände (Δ*ν*₁), die zwischen zwei beliebigen spektral benachbarten Spektralimpulskomponenten bestehen, zwischen verschiedenen Paaren benachbarter Spektralimpulskomponenten konstant sind.

5. Gepulstes LIDAR-System (100) nach einem der vorstehenden Ansprüche, wobei der Emissionspfad (10) ferner so eingerichtet ist, dass eine Anzahl der spektral disjunkten Impulsspektralkomponenten, die jeden Impuls (I) bilden, zwischen 2 und 20, vorzugsweise zwischen 4 und 12, liegt.

6. Gepulstes LIDAR-System (100) nach einem der vorstehenden Ansprüche, wobei der Emissionspfad (10) umfasst:
- eine Laseremissionsquelle (11), die eingerichtet ist, um eine initiale Laserstrahlung (R₀) zu erzeugen;
- einen Kammerzeugungsmodulator (17), der dazu angeordnet ist, die initiale Laserstrahlung (R₀) gemäß einem Modulationssignal, das an einen Steuereingang des Kammerzeugungsmodulators angelegt wird, zu ändern, und
- einen Modulationssignalerzeuger (18), der so angeschlossen ist, dass er das Modulationssignal an den Steuereingang des Kammerzeugungsmodulators (17) anlegt, wobei das Modulationssignal so beschaffen ist, dass die initiale Laserstrahlung (R₀) vom Kammerzeugungsmodulator (17) in einen Satz spektraler Komponenten umgewandelt wird, die dazu bestimmt sind, nacheinander die spektralen Komponenten von Impulsen zu bilden.

7. Gepulstes LIDAR-System (100) nach Anspruch 6, wobei der Kammerzeugungsmodulator (17) ein elektrooptischer Kammerzeugungsmodulator ist und die Reihe von Impulsen (I) mit dem spektralen Abstand zwischen den Komponenten, der zwischen zwei nacheinander emittierten Impulsen variiert, durch Steuerung des elektrooptischen Kammerzeugungsmodulators erhalten wird.

8. Gepulstes LIDAR-System (100) nach Anspruch 7, wobei die Steuerung des elektrooptischen Kammerzeugungsmodulators (17) so eingerichtet ist, dass die Strahlung (R₁), so wie sie direkt vom Modulator kommt, bevor sie an einen akustooptischen Frequenzverschiebungs- und Impulsschneidemodulator (12) übertragen wird, keine spektrale Komponente bei einem Emissionswellenlängenwert der Laseremissionsquelle (11) aufweist.

9. Gepulstes LIDAR-System (100) nach einem der Ansprüche 1 bis 8, wobei ein Referenzeingang des Detektionspfads (20) mit einem sekundären Ausgang (16) des Emissionspfads (10) verbunden ist, um ein optisches Referenzsignal (RR) zu empfangen, das Referenzspektralkomponenten umfasst, die eins zu eins den Spektralkomponenten der Impulse (I) entsprechen, mit einer spektralen Verschiebung (Δ*ν*₀) zwischen jeder Impulsspektralkomponente und der Referenzspektralkomponente, die dieser Impulsspektralkomponente entspricht, die für alle Impulsspektralkomponenten identisch ist,
so dass die Heterodyndetektionsbeiträge, die den Impulsspektralkomponenten im Heterodyndetektionssignal, wie sie vom Detektionspfad (20) erzeugt werden, zugeordnet sind, alle spektral überlagert sind.

10. Gepulstes LIDAR-System (100) nach Anspruch 9 und einem der Ansprüche 6 bis 8, wobei der sekundäre Ausgang (16) des Emissionspfads (10) in dem Emissionspfad bezüglich einer Ausbreitungsrichtung der Strahlung im Emissionspfad stromabwärts des Kammerzeugungsmodulators (17) angeordnet ist.

11. Gepulstes LIDAR-System (100) nach einem der Ansprüche 1 bis 8, wobei ein Referenzeingang des Detektionspfads (20) mit einem sekundären Ausgang (16) des Emissionspfads (10) verbunden ist, um ein optisches Referenzsignal zu empfangen (RR), das monochromatisch ist, so dass die Heterodyndetektionsbeiträge, die den Impulsspektralkomponenten im Heterodyndetektionssignal, wie es durch den Detektionspfad (20) erzeugt wird, zugeordnet sind, entsprechend einer Verteilung der spektralen Impulskomponenten spektral zueinander verschoben sind, und wobei das Spektralanalysemodul (30) dazu eingerichtet ist, den Wert der Dopplereffekt-Frequenzverschiebung(*ν*_{Doppler}) aus zentralen Frequenzwerten abzuleiten, die jeweils relativ zu jedem der Heterodyndetektionsbeiträge sind.

12. Gepulstes LIDAR-System (100) nach Anspruch 11 und einem der Ansprüche 6 bis 8, wobei der sekundäre Ausgang (16) des Emissionspfads (10) in dem Emissionspfad bezüglich einer Ausbreitungsrichtung der Strahlung im Emissionspfad stromaufwärts des Kammerzeugungsmodulators (17) angeordnet ist.

13. Gepulstes LIDAR-System (100) nach einem der vorstehenden Ansprüche, wobei der Emissionspfad (10) und/oder der Detektionspfad (20) durch Glasfasertechnologie umgesetzt ist, um Komponenten des Emissionspfads und/oder des Detektionspfads miteinander zu verbinden.

## Claims

1. A pulsed LIDAR system (100), adapted to determine a value of a Doppler effect frequency shift (ν_{Doppler}) which is undergone by a series of radiation pulses (I) successively emitted by the system towards a target (T), between portions of the pulses as received after retroreflection or backscattering on the target and said pulses as emitted by the system, and to provide, based on the value determined for the frequency shift, an estimate of a speed component (V_{T}) of the target which is parallel to an optical emission direction of the system,
the system (100) comprising:
- a transmission path (10), configured to produce the series of pulses (I),
- a detection path (20), configured to detect the pulse portions (RI) received after retroreflection or backscattering on the target (T), and to produce heterodyne detection signals which correspond to the pulses (I) of the series,
- a spectral analysis module (30), adapted to carry out a spectral analysis of the heterodyne detection signals, so that the value of the frequency shift (ν_{Doppler}) results from heterodyne detection contributions which correspond to the pulses (I) of the series, and
the transmission path (10) being further configured to form each of the pulses (I) as a superposition of a plurality of pulse spectral components which are emitted simultaneously, are spectrally disjoint, and are associated one-to-one with different central wavelength values, and
the system (100) being adapted so that the value of the frequency shift (ν_{Doppler}) which is determined by the spectral analysis module (30) results from a plurality of heterodyne detection contributions which respectively correspond to the pulse spectral components of the pulses (I) of the series
the system (100) being **characterized in that** it is further adapted so that the disjoint spectral components of two pulses (I) which are emitted successively are separated by an inter-component spectral gap which varies between said two successive pulses , and so that said inter-component spectral gap varies periodically during the complete series of pulses.

2. The pulsed LIDAR system (100) according to claim 1, adapted to provide an estimate of an air flow speed component when the system is pointed to emit the radiation pulses (I) towards a portion of the atmosphere which contains suspended particles forming the target (T), the particles being backscatterers for said radiation.

3. The pulsed LIDAR system (100) according to claim 1 or 2, wherein the transmission path (10) is further configured so that the spectral components of each pulse (I) are spectrally separated by at least 10 MHz, preferably at least 20 MHz, and at most 2000 MHz.

4. The pulsed LIDAR system (100) according to any one of the preceding claims, wherein the transmission path (10) is further configured so that spectral differences (Δν₁) which exist between any two of the pulse spectral components which are spectral neighbors are constant between different pairs of pulse spectral components which are neighbors.

5. The pulsed LIDAR system (100) according to any one of the preceding claims, wherein the transmission path (10) is further configured so that the number of the spectrally disjoint pulse spectral components which constitute each pulse (I) is between 2 and 20, preferably between 4 and 12.

6. The pulsed LIDAR system (100) according to any one of the preceding claims, wherein the transmission path (10) comprises:
- a laser emission source (11), adapted to produce an initial laser radiation (R₀);
- a comb generation modulator (17), arranged to modify the initial laser radiation (R₀) in accordance with a modulation signal applied to a control input of said comb generation modulator; and
- a modulation signal generator (18), connected so as to apply the modulation signal to the control input of the comb generation modulator (17),
said modulation signal being such that the initial laser radiation (R₀) is transformed by the comb generation modulator (17) into a set of spectral components which are intended to form, one-to-one, the pulse spectral components.

7. The pulsed LIDAR system (100) according to claim 6, wherein the comb generation modulator (17) is of the electro-optical type, and the series of pulses (I) with the inter-component spectral gap which varies between two successively emitted pulses is obtained by a control of the electro-optical comb generation modulator.

8. The pulsed LIDAR system (100) according to claim 7, wherein the control of the electro-optical comb generation modulator (17) is designed so that the radiation (R₁) as directly issued from said modulator, before being transmitted to a frequency shift and pulse cutting modulator of the acousto-optical type (12), is devoid of spectral component at an emission wavelength value of the laser emission source (11).

9. The pulsed LIDAR system (100) according to any one of claims 1 to 8, wherein a reference input of the detection path (20) is connected to a secondary output (16) of the transmission path (10) in order to receive an optical reference signal (RR) which comprises reference spectral components corresponding, one-to-one, to the pulse spectral components of the pulses (I), with a spectral shift (Δν₀) between each pulse spectral component and the reference spectral component which corresponds to said pulse spectral component, which is identical for all pulse spectral components,
so that the heterodyne detection contributions associated with the pulse spectral components in the heterodyne detection signal as produced by the detection path (20) are all spectrally superimposed.

10. The pulsed LIDAR system (100) according to claim 9 and any one of claims claims 6 to 8 , wherein the secondary output (16) of the transmission path (10) is located in said transmission path downstream of the comb generation modulator (17), relative to a direction of propagation of the radiation in said transmission path.

11. The pulsed LIDAR system (100) according to any one of claims 1 to 8, wherein a reference input of the detection path (20) is connected to a secondary output (16) of the transmission path (10) in order to receive an optical reference signal (RR) which is monochromatic,
so that the heterodyne detection contributions associated with the pulse spectral components in the heterodyne detection signal as produced by the detection path (20), are spectrally shifted relative to each other in accordance with a distribution of the pulse spectral components,
and wherein the spectral analysis module (30) is adapted to deduce the value of the Doppler effect frequency shift (ν_{Doppler}) based on central frequency values which are respectively relative to each of the heterodyne detection contributions.

12. The pulsed LIDAR system (100) according to claim 11 and any one of claims 6 to 8 , wherein the secondary output (16) of the transmission path (10) is located in said transmission path upstream of the comb generation modulator (17), relative to a direction of propagation of the radiation in said transmission path.

13. The pulsed LIDAR system (100) according to any one of the preceding claims, wherein the transmission path (10) and/or the detection path (20) is implemented by optical fiber technology, to interconnect components of said transmission path and/or detection path.
